# EUROPEAN PATENT APPLICATION

(11) **EP 3 450 418 A1**
(43) Date of publication of application: **06.03.2019**
(21) Application number: 17788861.7
(22) Date of filing: 20.04.2017
(51) Int. Cl.: C05F 5/00

(54) **METHOD FOR OBTAINING A PLANT-GROWTH-PROMOTING COMPOSITION COMPRISINGPSEUDOMONAS PUTIDA**

(30) Priority: 29.04.2016 ES 201630562
(71) Applicant: Fundacio Universitaria Balmes, 08500 Vic (ES); Hidalgo Santamaria, Ruben Gerardo, 08018 BARCELONA (ES); Mosquera Colinas, Veronica, 08191 RUBI (BARCELONA) (ES)
(72) Inventor: HIDALGO SANTAMARIA, Ruben Gerardo, 08191 RUBI (BARCELONA) (ES); MOSQUERA COLINAS, Veronica, 08191 RUBI (BARCELONA) (ES); CULLELL DALMAU, Marta, 17430 SANTA COLOMA DE FARNERS (GIRONA) (ES)
(74) Representative: Durán-Corretjer, S.L.P.
(86) International application number: PCT/ES2017/070243
(87) International publication number: WO 2017/186990

(57) **Abstract**

The invention relates to a method for obtaining a plant-growth-promoting composition comprising *Pseudomonas putida,* including the following steps: a) growing *Pseudomonas putida* bacteria in a culture medium containing industrial waste; and b) collecting the resulting culture and preserving same at 4° C. The industrial waste can be whey or molasses. The invention also relates to the use of the composition obtained from said method in order to increase the productivity of vegetable crops, such as chards, tomatoes and lettuces, as well as to maintain lawns, such as on a golf course.

## Description

The present invention relates to the sector of biotechnology applied to agriculture, and relates in particular to a method for obtaining a composition that promotes plant growth, which composition comprises the bacterium *Pseudomonas putida* as the sole biological agent and to the use of said composition. The method for obtaining is based on the use of industrial waste, for example whey and molasses, as a culture medium for *Pseudomonas putida,* thus considerably reducing production costs of said bacterium and reducing the use of waste that may contaminate the environment.

The composition obtained by means of the method of the present invention can be classified as a biostimulant or plant-growth-promoting rhizobacteria (PGPR), since it is a microorganism that increases the growth of plants, with an increase in the emergence, vigour, biomass, development in root systems and increases of up to 30% in the production of crops of commercial interest being observed. This effect is achieved by virtue of symbiosis established between the root of the plant and the bacteria that adheres to it. The bacterium obtains nutrients from the root that it cannot obtain in the soil and in turn provides other nutrients to the plant by means of the breakdown of components present in the soil, such as nitrates and phosphates. In addition, another known function of said bacterium is that of being a biological control agent (BCA). This means that when said bacterium is introduced into the roots of plants, the appearance of other bacteria and fungi harmful to said plants on account of the principle of competition is avoided.

*Pseudomonas putida* is a bacterium that lives in soils and water, and can occasionally also be found living in the rhizosphere of plants (the region of soil around the root), with which plants it has a symbiotic relationship. In this mutual association, the plant provides nutrients to the bacterium which, in turn, can mobilise nutrients for the plant or protect it against pathogens and pests.

It is a non-pathogenic bacterium for animals and humans, has a high metabolic capacity and can break down a high number of different carbon compounds, some of which are toxic and contaminating. This bacterium is therefore used in bioremediation of petroleum derivatives and in the chemical industry.

It is known that *Pseudomonas putida* is an organism that promotes plant growth and has been shown to be a highly efficient organism for increasing the growth of plants and their tolerance to other microorganisms that cause diseases.

Another feature of this bacterium is that it is capable of synthesising the enzyme 1-aminocyclopropane-carboxyl (ACC) deaminase, which hydrolyses the ACC on a rhizospheric level, an immediate precursor of ethylene biosynthesis in plants, causing a decrease in the ACC concentration in plants, which results in root elongation. In addition, ethylene stimulates germination and breaks the dormancy of seeds.

One problem that exists for obtaining this bacterium on an industrial scale is that the culture medium normally used for its growth is very costly since it contains components such as meat extract, peptone from meat and peptone, which components are very costly, meaning that products that are on the market have hitherto had a very high price.

After extensive studies, the inventors of the present invention have surprisingly found a method for obtaining *Pseudomonas putida* on an industrial scale, which method uses industrial waste, such as whey and molasses, as a raw material in the culture medium, which makes it possible to significantly reduce production costs and, in addition, contributes to the improvement of the environment, thus providing additional value to the product obtained.

In the present invention, the term whey refers to the liquid fraction obtained during the coagulation of milk in the cheese and casein manufacturing process, after separation of the micellar phase. It is a greenish yellow, turbid liquid with a fresh, slightly sweet, acidic flavour and contains 94% water, proteins and fats. It is a by-product that is rich in water-soluble globular proteins, lactose, fats and minerals, and is therefore a significant source of nutrients for human and animal health. As a result, it is one of the main sources of environmental contamination. Every year large quantities of whey are produced, because in order to produce 1 kg of cheese from 10 litres of milk, 9 litres of whey are obtained.

Whey has long been considered a difficult waste product to treat and eliminate because of the large quantities produced in the cheese industry. The dairy industry generates a large volume of wastewater having a high level of contamination in organic matter composed mainly of lactose and proteins. A concentration of whey of between 1 and 2% in the water of rivers quickly produces acid aerobic fermentations which hinder the biological activity of the rivers.

For example, the Spanish environmental regulation (Royal Legislative Decree 1/2001, of 20 July, which approves the revised text of the Water Law) does not allow the dumping of whey into the environment and requires cheese producers to manage the whey that they produce. The cost of a treatment facility capable of carrying out not only the filtering of effluents from the cheese industry but the filtering of the whey, is very high and the vast majority of cheese factories are unable to afford it. This means that the whey must be managed and treated independently of the other effluents from the cheese processing plant.

A person skilled in the art knows that it is possible to obtain whey from other alternative sources, for example from the yoghurt production process, among others, which are also within the scope of protection of this patent.

Moreover, molasses can also be used in the method of the present invention. The term molasses refers to a thick, liquid product derived from corn, sugar cane and, to a lesser extent, sugar beet and cereals, obtained from the remaining residue in the extraction tanks of the sugars of the aforementioned raw materials. The appearance of molasses is very similar to that of honey although it has a very dark brown colour, virtually black. The taste is sweet, somewhat similar to liquorice, with a moderate, bitter aftertaste.

Nutritionally, molasses has a high content of carbohydrates in addition to vitamins of group B and abundant minerals, notably iron, copper and magnesium. The water content of molasses is low. It is made by cooking the juice of the sugar cane until the partial evaporation of the water contained therein, thus forming a semi-crystallised, honey-like product.

Molasses is used mainly as an energy supplement for feeding ruminants because of its high sugar content and its low cost in some regions. Nevertheless, a small proportion of the production goes to human consumption where it is used as a culinary sweetener.

A person skilled in the art knows that it is possible to obtain molasses from other alternative sources, which are also within the scope of protection of this patent.

However, the inventors of the present invention do not know the effects on the yield of the plants when molasses is used in the culture medium of the bacterium *Pseudomonas putida.* Therefore, in a first aspect, the present invention discloses a method for obtaining a plant-growth-promoting composition comprising *Pseudomonas putida,* which method comprises a step of bacterial growth in which industrial waste is used, such as whey or molasses.

The method for obtaining a plant-growth-promoting composition comprising the bacterium *Pseudomonas putida* comprises the following steps:
a) cultivating the bacterium *Pseudomonas putida* in a culture medium comprising industrial waste; and
b) collecting the obtained culture and preserving it at 4°C.

In a specific embodiment, the industrial waste is whey. In another embodiment, the industrial waste is molasses.

When whey is used, the method of the present invention comprises an additional step of pre-treating said whey such that it is in sterile conditions, provides the necessary nutrients and does not exhibit its characteristic turbidity. Said treatment may include autoclaving, non-sterile and sterile filtration, heating, among other steps. A person skilled in the art knows in what manner to pre-treat the whey such that it can be useful as a culture medium.

The concentration of molasses in the culture medium of step a) should be in the range of between 2.5% and 10% (v/v), preferably of between 2.5 and 5% (v/v). When whey is used, the concentration thereof should be in a range of between 25% and 100% (v/v).

The culture medium of the present invention may optionally comprises other components that support optimal growth of the bacteria, such as yeast extract, K₂HPO₄, glucose, among others. A person skilled in the art knows that concentrations of these components have to be used in order to obtain an optimal medium for bacterial growth.

A further advantage of the method of the present invention is that it is not necessary to carry out additional purification or final formulation steps of the product; that is to say, the product directly collected after fermentation is suitable for use as a promoter of plant growth.

The process of cultivating the bacterium *Pseudomonas putida* of the present invention involves inoculating a bioreactor that contains the aforementioned medium having between 5 and 10% (v/v) of an inoculum grown for 8-24 h. Throughout cultivation, a temperature of between 20 and 30°C, variable agitation according to the demand for dissolved oxygen, a dissolved oxygen level of between 20 and 40% and a pH of between 6.0 and 9.0 are maintained. The duration of the cultivation varies depending on the growth rate observed. Once the desired cell concentration is reached, cultivation is stopped and the product is directly packaged in sterile containers.

Using the method of the present invention it is possible to obtain at least 10⁶ cells/ml, preferably between 10⁶ and 10⁹ cells/ml. Using a concentration of at least 10⁶ cells/ml, the product obtained, once applied to agricultural crops, exhibits its plant-growth-promoting properties. Furthermore, the product exhibits stability, in regard to viable cells and pH in real time and at a temperature of 4°C, of at least 75 days without the need to use a preservative. Optionally, a preservative may be used, as a result of which the stability of the product would be significantly higher.

The present invention also relates to the use of the plant-growth-promoting composition comprising the bacterium *Pseudomonas putida* obtained by means of the above-mentioned method for increasing the productivity of vegetable cultivation. For example, said vegetable crops may be tomatoes, chards and lettuces, among others. The composition of the present invention may also be applied in other crops such as cereals, fruit trees and ornamental plants.

Furthermore, the plant-growth-promoting composition comprising the bacterium *Pseudomonas putida* obtained by means of the above-mentioned method may be used for turf maintenance. For example, said lawn may be the turf of a golf course.

Finally, the present invention also relates to the use of whey or molasses as a culture medium for microorganisms that promote plant growth.

The invention is described below with reference to the appended figures in which:
- Fig. 1 is a graph showing the growth over time of the bacterium *Pseudomonas putida* in a 2 I reactor in three different media: pretreated whey + 7.5 g/l of yeast extract; molasses 0.5% (v/v) + 0.5 g/l of yeast extract; and the medium commonly used for the growth of *Pseudomonas putida* (meat extract (1 g/l), yeast extract (2 g/l), peptone (5 g/l), NaCl (5 g/l), distilled H₂O (11)).
- Fig. 2 is a stability study at a temperature of 4°C of the product collected after fermentation, in which the number of viable cells and the pH were measured.

For a better understanding, the present invention is described below with reference to the following examples, which are in no way intended to limit the present invention.

### EXAMPLES

### Example 1. Comparison between the methods of obtaining Pseudomonas putida using the 'common medium', and media containing whey and molasses.

The strain of *Pseudomonas putida* used was the bacterial strain deposited with the access number CECT 7881 in the *Colección Española de Cultivos Tipo* (CECT) [Spanish Type Culture Collection].

Culture media:
'Common medium' (medium recommended by CECT for the cultivation of *Pseudomonas putida*)*:* meat extract (1 g/l), yeast extract (2 g/l), peptone (5 g/l), NaCl (5 g/l), distilled H₂O (1 I).
Whey medium 1: whey 100% + 7.5 g/l of yeast extract.
Molasses medium: molasses 0.5% (v/v) + 0.5 g/l of yeast extract.

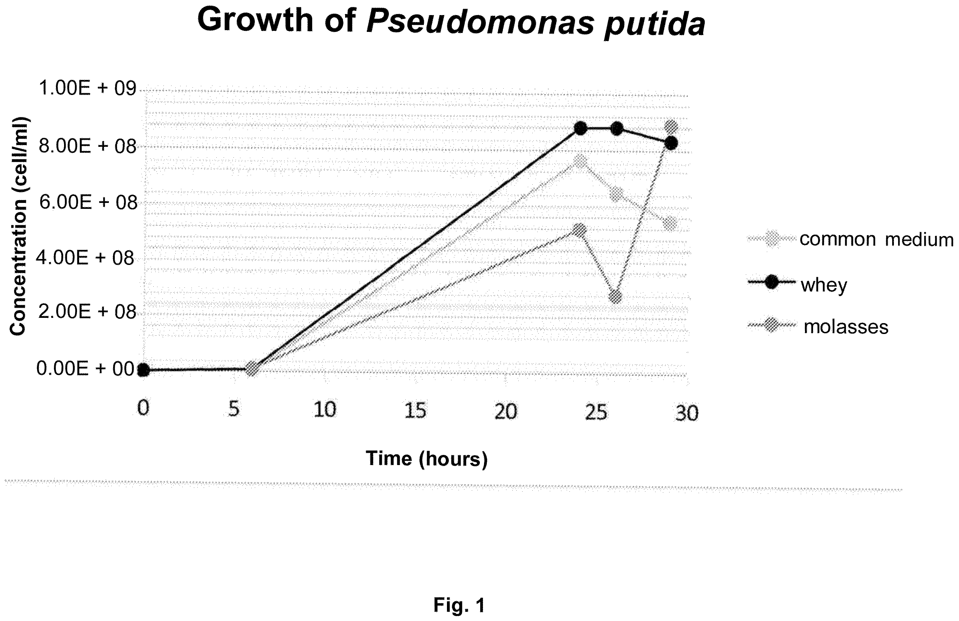

For the studies, a Biostat A bioreactor (Sartorius Stediem, Germany) of 2 litres was used. The results are shown in Fig. 1. It is evident that in all the media used, the bacterium exhibited adequate growth, reaching in all cases a cell concentration of above 5 × 10⁸ cell/ml at 29 hours of culture.

### Example 2. Stability study of the product obtained in Example 1.

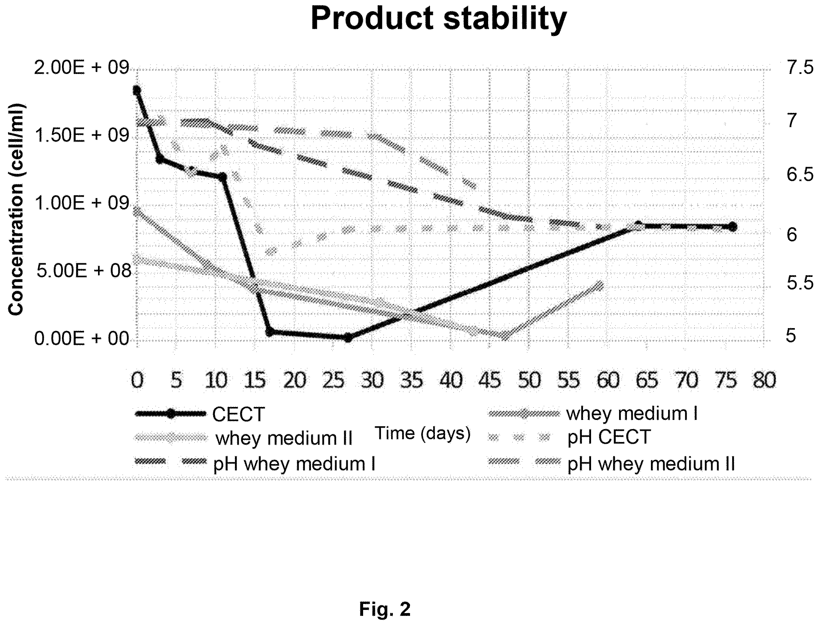

The product obtained by means of the method of the present invention in Example 1 was subjected to a stability study in real time at a temperature of 4°C. To do this, a cell count was performed in a Neubauer chamber until the cell concentration was lower than 10⁶ cells/ml. The cell count was complemented with plating to confirm that the cells counted were viable. The pH was also monitored in order to determine whether it was at optimum values for the bacterium. The results are shown in Fig. 2 and demonstrate that the product is stable for at least 75 days under these conditions.

### Example 3. Application of the product obtained according to the method of the present invention in chard crops.

Firstly, the product obtained by means of the method of Example 1 was brought to a concentration of 10⁸ cells/ml. Three different doses of 3, 6 and 9 ml, respectively, were applied to "delta" chard seedlings one day before the transplant thereof, such that the product reaches the entire volume of soil of each seedling, thus becoming attached to the entire root. Once sown, doses of 6, 12 and 18 ml were applied, respectively, by means of Pasteur pipettes of 3 ml, every 15 days, for a total of three applications. For each dose, 5 plants and 15 control plants were used, to which only water was applied. The fresh weight, the volume of the plant without roots and the dry weight of each one were counted.

In the case of dose 2, the best results were obtained, the "delta" chard exhibiting an increase in weight with respect to the average weight of the control group of 34.8%. The increase in dry matter of this dose with respect to the control group was 8.7%.

### Example 4. Application of the product obtained according to the method of the present invention in tomato crops.

The same method as in the previous example was carried out using "Raf" tomato plants. In this case, each dose contained 10 plants to be studied and they were compared with a total of 30 control plants, to which only water was applied. Furthermore, in this case, the different productivity parameters were only evaluated once the fruits were obtained.

The number of ripe tomatoes per plant was counted weekly. With respect to the control plants, increases were obtained of 69.74% (dose 2) over a period of three months.

Moreover, the same method as in the previous example was carried out using "pear" tomato plants. In this case, each dose contained 4 plants to be studied and they were compared with a total of 12 control plants, to which only water was applied. Furthermore, in this case, the different productivity parameters were only evaluated once the fruits were obtained.

The number of ripe tomatoes per plant was counted weekly. With respect to the control plants, increases of 34.69% were obtained (dose 2) over a period of a month.

### Example 5. Application of the product obtained according to the method of the present invention in lettuce cultures.

The method of the previous examples was repeated using lettuces of the "long" type, which showed a weight increase of 40.03% (dose 1). The volume increased by 25.57% (dose 1).

### Example 6. Application of the product obtained according to the method of the present invention on a golf course.

The golf course of the Llavaneras Golf Club (Catalonia, Spain) was used. 16 squares of 0.5 x 0.5 m (0.25 m²) were demarcated to which a dose of 10⁷ cells/ml of the plant-growth-promoting composition comprising the *Pseudomonas putida* bacterium obtained by means of the method of the present invention indicated above was applied per square, and 16 equal control squares were demarcated to which water was applied.

Different soil samples were collected for analysis after one month, using one single application of the product. The analytical tests carried out in the laboratory were: determination of pH, determination of carbonates by means of a Bernard calcimeter, determination of total nitrogen by means of the Kjeldahl method, and assimilable phosphorus by means of the Olsen-Watanable method.

The results obtained were the following. The pH stabilised in the treated turf from 9.07 to 8.3. The nitrogen measured by the Kjeldahl method increased by 45.7% and the ammoniacal nitrogen increased by 49.0%. Furthermore, the assimilable phosphorus was reduced by 53.4% in the turf treated by assimilation of the turf.

## Claims

1. Method for obtaining a plant-growth-promoting composition comprising the bacterium *Pseudomonas putida,* **characterised in that** it comprises the following steps:
a) cultivating the bacterium *Pseudomonas putida* in a culture medium comprising industrial waste; and
b) collecting the obtained culture and preserving it at 4°C.

2. Method according to claim 1, **characterised in that** the industrial waste is whey.

3. Method according to claim 1, **characterised in that** the industrial waste is molasses.

4. Method according to claim 2, **characterised in that** it comprises an additional step of pre-treating the whey.

5. Method according to claim 2, **characterised in that** the concentration of the whey in the culture medium is in the range of between 25% and 100% (v/v).

6. Method according to claim 2, **characterised in that** the concentration of molasses in the culture medium is in the range of between 0.1% and 5% (v/v).

7. Method according to any one of the preceding claims, **characterised in that** it optionally comprises other components such as yeast extract, K₂HPO₄, glucose, among others.

8. Method according to any one of the preceding claims, **characterised in that** the cultivation step is carried out at a temperature of between 20 and 30°C, variable agitation according to the demand for dissolved oxygen, a dissolved oxygen level of between 20 and 40% and a pH of between 6.0 and 9.0.

9. Method according to any one of the preceding claims, **characterised in that** at least 10⁶ cells/ml are obtained in said method.

10. Method according to any one of the preceding claims, **characterised in that** said obtained plant-growth-promoting composition is stable at 4°C for at least 75 days.

11. Use of the plant-growth-promoting composition comprising the bacterium *Pseudomonas putida* obtained by means of the method according to claims 1 to 10 for increasing the productivity of vegetable cultivation.

12. Use according to claim 11, **characterised in that** said vegetables are tomatoes.

13. Use according to claim 11, **characterised in that** said vegetables are chards.

14. Use according to claim 11, **characterised in that** said vegetables are lettuces.

15. Use of the plant-growth-promoting composition comprising the bacterium *Pseudomonas putida* obtained by means of the method according to claims 1 to 10 for maintaining a turf.

16. Use according to claim 15, **characterised in that** said turf is the turf of a golf course.
